# EUROPEAN PATENT SPECIFICATION

(11) **EP 3 459 861 B1**
(45) Date of publication and mention of the grant of the patent: **04.11.2020**
(21) Application number: 17001577.0
(22) Date of filing: 22.09.2017
(51) Int. Cl.: B64F 1/10, B64F 1/02, B64F 5/50

(54) **AIRCRAFT RECOVERY AND LANDING STATION**
FLUGZEUGAUFNAHME UND -LANDESTATION
STATION DE RÉCUPÉRATION ET D'ATTERRISSAGE POUR AÉRONEF

(43) Date of publication of application: 27.03.2019
(73) Proprietor: Airbus Defence and Space GmbH, 82024 Taufkirchen (DE)
(72) Inventor: Schroeteler, Thorsten, 85077 Manching (DE); Kaiser, Mario, 85077 Manching (DE)
(74) Representative: LKGLOBAL Lorenz & Kopf PartG mbB Patentanwälte

(56) References cited:
- WO-A1-2004/087459
- DE-A1-102010 051 112
- FR-A- 999 871
- US-A- 4 462 560
- US-B1- 6 695 255

## Description

### Technical Field

Various embodiments relate generally to an aircraft recovery and landing station.

### Background

Conventionally aircraft are designed with a landing gear to support the aircraft while landing at an airport. Such landing gear also acts as a shock absorber to absorb and dissipate the energy from an aircraft in descent while touching the ground. The landing gear becomes complex as the weight of the aircraft increases and the major structural components such as the fuselage and wing are designed to accommodate such landing gear and to dissipate the landing energy without damaging the structure. Further due to size of the landing gear, there should be further complex mechanism to be incorporated to retract the landing gear during flight in order to reduce the aerodynamic drag exerted by the landing gear. Due to the feature of retracting the landing gear during flight, there should be some space in the fuselage and in certain aircraft in the wing dedicated to house the landing gear.

Apart from the complex design requirement on the aircraft, the runway in the airport also needs to be designed accordingly to be able to withstand the forces exerted by the aircraft on the runway. The runway is normally designed to withstand the load from the heaviest aircraft the airport can handle. Any new aircraft introduced by aircraft manufacturers need to take in consideration the limitation of most of the airports the new aircraft intended to be operated from, and hence have to limit the overall weight of the new aircraft. Further, in order to attract business some airports reinforce their runways to enable aircraft not designed to be operated from such airports.

Further, there are instances where there is a system failure and some or all the landing gear of an aircraft are not extended during landing. In such situations, the aircraft is forced to make a crash landing damaging both the aircraft structures and the airport runway.

Hence, there may be a need to provide for an airport a device and a method to overcome the above-mentioned disadvantages.

### Summary

The problem of the present invention is solved by the subject matters of the independent claims. Further advantageous embodiments of the invention are included in the dependent claims. It should be noted that the aspects of the invention described in the following apply both to the aircraft receiving station and to a method for receiving an aircraft at a receiving station.

According to the present invention, a receiving station to receive an aircraft is provided. The receiving station comprises a receiving bed. The receiving bed comprises at least a compressor unit, an upper layer, and a lower layer. The upper layer includes at least one air cushion. The air cushion of the upper layer is configured to receive at least a part of the aircraft. At least one of the air cushion of the upper layer and the lower layer is configured to receive air from the compressor unit. The lower layer is configured to float the receiving bed by blowing air through a plurality of outlets. The receiving station further comprises a drive mechanism. The drive mechanism includes at least one of a drive unit and a direction control unit. The drive mechanism is configured to move the receiving bed in at least one of a linear direction and a rotational direction.

The method of floating the receiving bed by blowing the pressurized air through the outlet and the design of the lower layer could be similar to that of a hovercraft. This may allow a smooth operation of the receiving bed on almost any type of surface of the receiving station without the surface being necessarily reinforced.

The linear direction can be defined to be along an axis substantially parallel to the length of the receiving bed. The rotation direction can be defined to be about an axis substantially perpendicular to the ground surface.

According to a further embodiment, each air cushion can include a pressure sensor to monitor the air pressure within the air cushion. The air cushion can also include a pressure release valve to release excess pressure if sensed by the pressure sensor. The air cushion can also be designed not to have any pressure sensors and the pressure release valve can be designed to release pressure if the pressure exceed beyond a pre-defined limit.

According to a further embodiment, the air cushion can be further designed in terms of its size to receive a part of the aircraft or the aircraft as the whole depending upon the size of the aircraft. Preferably, the size of the air cushion may correspond at least to a certain fraction of the aircraft.

According to a further embodiment, the pressure of the air received by the air cushion of the upper layer and the lower layer can be different. One or more pressure-regulating valve can be used to control the pressure of the air received by the air cushion and the lower layer.

According to a further embodiment, the drive mechanism could be a cable system, where the cables can be attached to the receiving bed and by pulling the cable on one end, the receiving bed can be moved in a linear direction. Further, the cable system could be installed on a rotating platform, where the rotation of the platform can move the receiving bed in the rotational direction. In such a mechanism, the cable system can be considered as the drive unit and the rotating platform can be considered as the direction control unit.

According to a further embodiment, the drive mechanism could be a ground vehicle attached to the receiving bed, for example, through a tow bar. Preferably, the ground vehicle is unmanned.

According to a further embodiment, the drive mechanism could be an integral part of the receiving bed and the drive unit and the direction control unit can operate similar to that of a drive unit and a direction control unit of a hovercraft.

The receiving station includes a controller unit. The controller unit is configured to ensure the safe operation of the receiving bed in receiving the aircraft or a part of the aircraft. The same can be achieved by series of steps, whereas the steps include receiving at least an information from the aircraft and an information from the receiving station. The information received from the aircraft includes at least one of the flight plan of the aircraft, a weight of the aircraft, a center of gravity of the aircraft, and the part of the aircraft to receive. The speed of the aircraft during approach phase of the aircraft and the approach direction of the aircraft to land of the flight plan of the aircraft could be one of many other information received from the aircraft to calculate the required parameter. The information received from the aircraft could be used to calculate the energy to be dissipated by the receiving bed while receiving the aircraft. The steps also include calculating one or more required parameter based on at least the information received from the aircraft. The controller unit is further configured to compare the required parameter against a corresponding limit parameter. The steps further include transferring a data back to the aircraft when at least one of the required parameter is greater than its corresponding limit parameter. The step further includes the possibility to modify a flight plan of the aircraft based on the data transferred to the aircraft. The controller unit is configured to repeat the steps until the required parameter is less than or equal to the corresponding limit parameter. Finally, the controller unit is configured to control at least one of the receiving bed and the drive mechanism when the required parameter is less than or equal to the corresponding limit parameter.

The controller unit can be an integral part of the receiving bed or the drive mechanism. Further, the controller unit can be placed separately at the receiving station or on a remote location. In certain cases, the controller unit could be placed in the aircraft to be received. It has to be understood that irrespective of the location of the controller unit, the controller unit communicates with one or many of all the systems, including the aircraft to be received through any known communication means.

According to a further embodiment, the data transferred back to the aircraft can be at least one of a desired approach speed of the aircraft and a desired approach direction of the aircraft.

According to a further embodiment, the information from the receiving station could be at least one of a location of the receiving station, an available space in the receiving station, and a weather data at the location of the receiving station. The available space in the receiving station can be defined as a part of the receiving station over which the drive mechanism can move the receiving bed in at least one of the linear direction and the rotational direction. For example, in case of a cable system, the available space in the receiving station can be defined as the part of the receiving station over which the cable system can pull the receiving bed. In case the cable system installed over a rotating platform, then the available space can be defined as the area of the circular segment based on the available rotation angle of the rotating platform. In case a ground vehicle is used as a drive mechanism, then the available space can be defined as the path available in the receiving station over which the ground vehicle can tow the receiving bed along. An example for such a path can be a runway and a taxiway in an airport. The weather data at the location of the receiving station can include at least one of a wind speed and a wind direction. The information on the wind speed and the wind direction, along with the information from the aircraft can be used by the controller unit to calculate one or more required parameters.

According to a further embodiment, the controller unit can be configured to store an information from the receiving bed. Alternatively, the controller unit can be configured to receive the information from the receiving bed. The information from the receiving bed can include at least one of a pressure limit of the air cushion and a pressure limit of the lower layer. The pressure limit of the air cushion and the pressure limit of the lower layer can be defined as an air pressure beyond which the air cushion or the lower layer may undergo a structural failure. The pressure limits can be an important parameter to consider to ensure that no attempt can be made to receive the aircraft beyond the capability of the receiving bed and hence the safety of the operation.

According to a further embodiment, the controller unit can be configured to store an information from the drive mechanism. Alternatively, the controller unit can be configured to receive the information from the drive mechanism. The information from the drive mechanism can include at least one of an acceleration limit, a braking limit, and a rotation limit. The acceleration limit and the braking limit can be defined by the capability of the drive unit, whereas the rotation limit can be defined by the direction control unit of the drive mechanism. Further, in certain cases, the rotation limit could be defined by the available space in the receiving station. For example, the path for a ground vehicle defined in a receiving station could be having a 90 degrees turn, and the ground vehicle could be having a rotation capability of more than 90 degrees. In such instance, the rotation limit can be 90 degrees for the particular path. Further, the information from the drive mechanism can also include a speed limit. In summary, the information from the drive mechanism can be all relevant information to understand the capability of the drive mechanism.

According to the invention, the limit parameters used by the controller unit to compare the required parameters include at least one of the pressure limit of the air cushion, the pressure limit of the lower layer, the acceleration limit, the braking limit, and the rotation limit.

According to a further embodiment, the controller unit can be configured to calculate at least one of a required pressure of the air cushion and a required pressure of the lower layer based on at least the information from the aircraft. The required pressure of the air cushion can be calculated in order to dissipate the kinetic energy of the aircraft due to the vertical component of the speed of the aircraft at which the aircraft planned to approach the receiving station. If the pressure of the air cushion is much higher or much lower than the required pressure, then the air cushion might damage the structure of the aircraft. The required pressure of the lower layer can be calculated to ensure that upon receiving the part of the aircraft or the aircraft as the whole, the receiving bed may not come in contact with the ground and remain afloat. If the receiving bed comes in contact with the ground upon receiving the aircraft, then the receiving bed might lose its capability to operate like a hovercraft and could possible lead to structural damage.

According to a further embodiment, the controller unit can be configured to calculate at least a position of the receiving bed and a corresponding time based on at least the information from aircraft and the information from the receiving station. The position of the receiving bed can include at least a starting position, a receiving position, and a stopping position. The position of the receiving bed and a path between two positions of the receiving bed can be within the available space in the receiving station. The receiving position can be defined as a position at which at least a part of the aircraft touches the air cushion of the receiving bed. The part of the aircraft or the aircraft as the whole continues to be on the air cushion at least between the receiving position and the stopping position. The controller unit can be further configured to calculate at least a required acceleration, a required braking, and a required rotation based on at least the position of the receiving bed, the corresponding time, and the path between two positions of the receiving bed.

The starting position and the stopping position can be understood as the position of the receiving bed at which the process of receiving the aircraft starts and ends rather than as a position where the receiving bed starts to move from a stationary position and comes back to a stationary position after receiving the aircraft.

According to the invention, the required parameters compared by the controller unit against limit parameters could include at least one of the required pressure of the air cushion, the required pressure of the lower layer, the required acceleration, the required braking, and the required rotation.

According to a further embodiment, at least one of the desired approach speed of the aircraft and the desired approach direction of the aircraft can be calculated based on at least one of a desired pressure of the air cushion, a desired pressure of the lower layer, a desired acceleration, a desired braking, and a desired rotation. The desired pressure of the air cushion can be the pressure limit of the air cushion when the required pressure of the air cushion is greater than the pressure limit of the air cushion. In case the required pressure of the air cushion is less than or equal to the pressure limit of the air cushion, the required pressure of the air cushion can be considered as the desired pressure of the air cushion. The desired pressure of the lower layer can be the pressure limit of the lower layer when the required pressure of the lower layer is greater than the pressure limit of the lower layer. In case the required pressure of the lower layer is less than or equal to the pressure limit of the lower layer, the required pressure of the lower layer can be considered as the desired pressure of the lower layer. The desired acceleration can be the acceleration limit of the drive mechanism when the required acceleration is greater than the acceleration limit. In case the required acceleration is less than or equal to the acceleration limit, the required acceleration of the drive mechanism can be considered as the desired acceleration. The desired braking can be the braking limit of the drive mechanism when the required braking is greater than the braking limit. In case the required braking is less than or equal to the braking limit, the desired braking can be the required braking of the drive mechanism. The desired rotation can be the rotation limit of the drive mechanism when the required rotation is greater than the rotation limit. In case the required rotation is less than or equal to the rotation limit, the desired rotation can be the required rotation of the drive mechanism. The process of calculating the desired approach speed of the aircraft and the desired approach direction of the aircraft could be crucial to ensure that the receiving of the aircraft by the receiving bed can be executed without any potential failure. Further, it has to be noted that while considering the limit parameters as desired parameters, the limit parameters can be lowered by a factor as a factor of safety.

According to a further embodiment, the controller unit could be configured to control the pressure of the air cushion to be the required pressure of the air cushion. The controller can be further configured to control the pressure of the lower layer to be the pressure of the required pressure of the lower layer. The controller unit can be further configured to control the drive unit of the drive mechanism to achieve at least one of the required acceleration and the required braking. The controller unit can be further configured to control the direction control unit of the drive mechanism to achieve the required rotation. It has to be understood that the required acceleration, the required braking and the required rotation could be dynamic and the value could be different at different time instances of the process of receiving the aircraft.

According to a further embodiment, the controller unit can be configured to ensure that the receiving bed is at the positions of the receiving bed at the corresponding time to successfully receive the aircraft or part of it. The same can be achieved by one or many of know methods such as image processing technique of using one or more cameras in the receiving bed and/or on the aircraft or using laser guidance system or such. Further, the controller unit can be configured to change the position of the receiving bed by changing at least one of the required acceleration, the required braking and the required rotation by a factor to ensure that the part of the aircraft or the aircraft as the whole touches the air cushion of the receiving bed at the receiving position. Even though the controller unit is configured to receive the weather data at the location of the receiving station, there could be a difference in the actual weather and the available weather data. Hence, it might be required to modify the position of the receiving bed during execution to ensure that the receiving bed properly receives the aircraft or the part of the aircraft to be received. The factor can be understood as a tolerance limit within which any of the required parameter will not exceed its corresponding limit parameter and/or the receiving bed will be within the available space of the receiving station.

According to a further embodiment, the aircraft can be configured to reject landing and to go around if the intended part of the aircraft or the whole aircraft does not touch the air cushion at or around the receiving position. Despite the controller unit being able to modify the position to an extent due to, the change in the weather condition for example, there might be a possibility that the receiving bed might not be able to receive the aircraft or part of the aircraft at or about the receiving position. In such instance, to ensure the safety of the aircraft, the receiving bed and hence the receiving station, the aircraft should be able to abandon the process of landing and to go around. In such case, the aircraft can attempt to land again at the same receiving station or at any other receiving station.

According to the present invention, also a **method** for receiving an aircraft at a receiving station as discussed in the foregoing paragraphs is presented.

The method comprises a step of receiving an information from the aircraft, wherein the information from the aircraft includes at least one of a flight plan of the aircraft, a weight of the aircraft, a center of gravity of the aircraft, and a part of the aircraft to receive. The method further comprise the step of receiving an information from the receiving station, wherein the information from the receiving station includes at least one of a location of the receiving station, an available space in the receiving station, and a weather data at the location of the receiving station. The method further comprise storing an information from the receiving bed or receiving the information from the receiving bed, wherein the information from the receiving bed include at least one of a pressure limit of an air cushion of an upper layer of the receiving bed, and a pressure limit of a lower layer of the receiving bed. Further, the method include storing an information from a drive mechanism or receiving the information from the drive mechanism, wherein the information from the drive mechanism include at least one of an acceleration limit of the drive mechanism, a braking limit of the drive mechanism, and a rotation limit of the drive mechanism.

The method further includes a step of calculating at least one of a required pressure of the air cushion and a required pressure of the lower layer based on at least the information from the aircraft. In certain cases where the pressure of the lower layer is fixed and may not be changed, it might not be required to calculate the required pressure of the lower layer. The step further include calculating at least one of a position of the receiving bed, a corresponding time to be in the position of the receiving bed, and a path between two positions of the receiving bed based on at least one of the information from the aircraft and the information from the receiving station. Further, the step include calculating at least one of a required acceleration, a required braking and a required rotation based on the calculated positions of the receiving bed, the corresponding time, and the path between two positions of the receiving bed.

The method further includes a step of calculating at least a desired approach speed of the aircraft and a desired approach direction of the aircraft based on at least a limit parameter if at least one of a required parameter is greater than the corresponding limit parameter. The required parameter is one or more of the required pressure of the air cushion, the required pressure of the lower layer, the required acceleration, the required braking, and the required rotation. The corresponding limit parameter is at least one of the pressure limit of the air cushion, the pressure limit of the lower layer, the acceleration limit, the braking limit, and the rotation limit. Further, the method includes modifying the flight plan of the aircraft based on at least one of the desired approach speed of the aircraft, and the desired approach direction of the aircraft.

The method further includes ensuring that the receiving bed to be at the calculated position of the receiving bed at the corresponding time. This may include modifying the position of the receiving bed to a certain acceptable limit to ensure that the receiving bed receives the aircraft or part of the aircraft, as required, safely without damaging either the aircraft or the receiving bed. Further, the method may include rejecting the landing of the aircraft and go around if the part of the aircraft does not touch the air cushion at the receiving position.

However, the skilled person will understand that these steps can be carried out in any other suitable order. Alternatively, one or more of the steps may be carried out concurrently.

These and other aspects of the present invention will become apparent from and be elucidated with reference to the embodiments described hereinafter.

### Brief Description of the Drawings

In the drawings, like reference characters generally refer to the same parts throughout the different views. The drawings are not necessarily to scale, emphasis instead generally being placed upon illustrating the principles of the invention. In the drawings, the left-most digit(s) of a reference number can identify the drawing in which the reference number first appears. The same numbers can be used throughout the drawings to reference like features and components. In the following description, various embodiments of the invention are described with reference to the following drawings, in which:
- FIG. 1: shows schematically a receiving bed;
- FIG. 2: shows schematically an embodiment of a receiving station;
- FIG. 3: shows schematically a flow chart of operation of a controller unit;
- FIG. 4: shows schematically a receiving bed receiving an aircraft; and
- FIG. 5: shows schematically a receiving bed receiving a part of an aircraft.

### Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

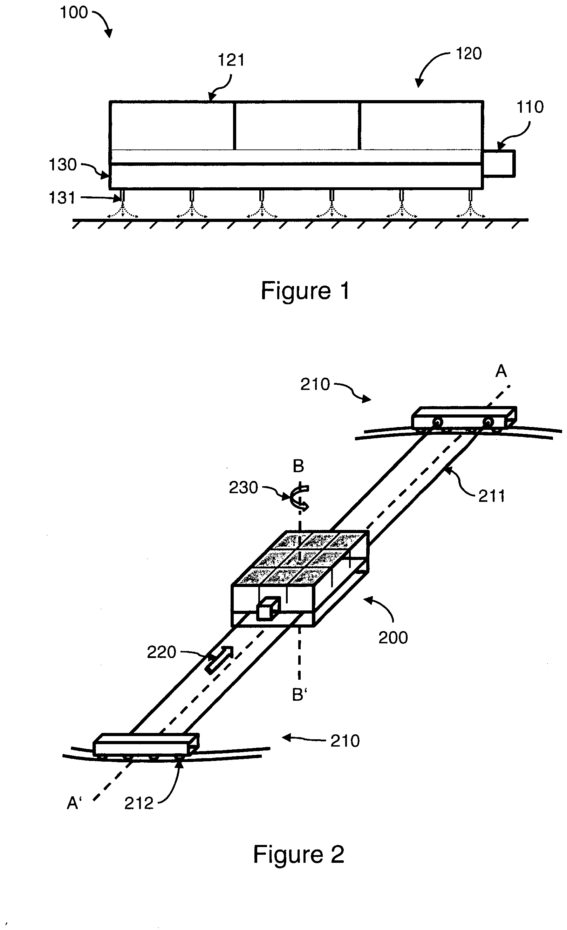

Figure 1 shows schematically an exemplary receiving bed 100 to receive at least an aircraft or part of the aircraft. Figure 1 shows schematically the receiving bed 100 comprising a compressor unit 110, an upper layer 120, and a lower layer 130. The upper layer 120 as illustrated in figure 1 includes an air cushion 121. In this illustration, the upper layer 120 includes three rows of air cushions 121. According to further not shown embodiment, the air cushion 121 can be only one or different from the illustration. The air cushion 121 and the lower layer 130 shown in figure 1 are configured to receive compressed air from the compressor unit 110, which is not shown in the figure. Further the figure 1 illustrates the lower layer 130 includes plurality of outlet 131. The compressed air received by the lower layer 130 from the compressor unit 110 is blown out through the plurality of outlet 131 towards the ground enabling the receiving bed 100 to float.

Figure 2 shows an exemplary embodiment of a receiving station. The receiving station includes a receiving bed 200 and a drive mechanism 210. The receiving bed 200 is similar to the receiving bed 100 described in figure 1. The drive mechanism 210 illustrated in figure 2 includes a drive unit 211 and a direction control unit 212. The drive unit 211 in this illustration is a cable system. The receiving bed 200 can be moved by the drive unit 211 in a linear direction 220 by means of a pulley (not shown in the figure). The linear direction 220 can be defined by an axis A-A', which is substantially parallel to the length of the receiving bed 100. The direction control unit 212 in this illustration is a track mechanism. The track is substantially circular enabling the drive mechanism 210 to rotate the receiving bed 200 about an axis B-B'. The axis B-B' is defined to be substantially perpendicular to the ground surface.

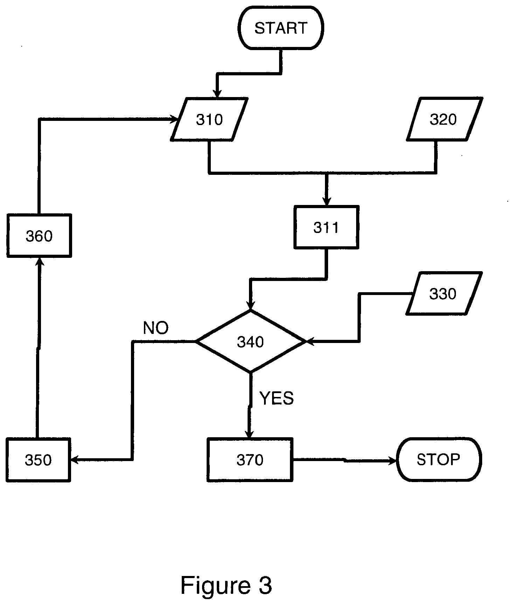

Figure 3 shows schematically a flow chart of operation of a controller unit. The operation of the controller unit includes a step of receiving at least an information 310 from an aircraft and an information 320 from a receiving station. The operation of the controller unit further includes a step of calculating one or more required parameter 311 based on at least one of the information 310 from the aircraft and the information 320 from the receiving station. The step further includes comparing the required parameter 311 against a corresponding limit parameter 330 if at least one of the required parameter 311 is greater than the limit parameter 330. The operation of the controller unit includes transferring a data 350 to the aircraft when at least one of the required parameter 311 is greater than its corresponding limit parameter 330. The step further includes another step to modify 360 the flight plan of the aircraft based on at least the data 350 transferred to the aircraft. The operation of the controller unit is configured to repeat the steps until the required parameter 311 is less than or equal to the corresponding limit parameter 330. The operation of the controller unit further includes a step of controlling 370 at least one of a receiving bed and a drive mechanism when the required parameter 311 is less than or equal to its corresponding limit parameter 330.

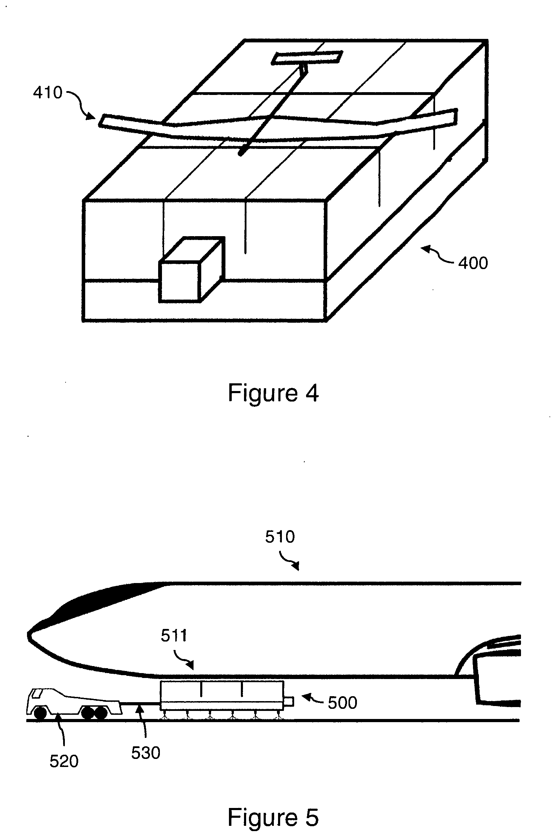

Figure 4 shows schematically a receiving bed 400 receiving an aircraft 410. The features and operation of the receiving bed 400 shown in the figure is similar to the receiving bed 100 as described in figure 1.

Figure 5 shows schematically a receiving bed 500 receiving a part 511 of an aircraft 510. The receiving bed 500 illustrated in the figure is similar in terms of design and operation of the receiving bed 100 described in figure 1. In this illustration, the receiving bed 500 is moved in the linear direction and the rotational direction by means of a drive mechanism 520. The drive mechanism 520 is a truck connected to the receiving bed 500 by means of a tow bar 530. The part 511 of the aircraft 510 received by the receiving bed 100 in this illustration is a lower part of the forward section of the fuselage of the aircraft 510.

## Claims

1. A receiving station for an aircraft (410) comprising;
a receiving bed (100), wherein the receiving bed comprises at least a compressor unit (110), an upper layer (120), and a lower layer (130);
wherein the upper layer (120) includes at least one air cushion (121);
wherein the air cushion (121) of the upper layer (120) is configured to receive at least a part of an aircraft (410);
wherein at least one of the air cushion (121) of the upper layer (120) and the lower layer (130) is configured to receive air from the compressor unit (110);
wherein the lower layer (130) is configured to float the receiving bed (100) by blowing air through a plurality of outlet (131); and
a drive mechanism (210), wherein the drive mechanism (210) includes at least one of a drive unit (211) and a direction control unit (212);
wherein the drive mechanism (210) is configured to move the receiving bed (100) in at least one of a linear direction (220) and a rotational direction (230);
wherein the receiving station includes a controller unit;
wherein the controller unit is configured to receive at least an information (310) from the receiving aircraft (410) and an information (320) from the receiving station;
wherein the information (310) received from the aircraft includes at least one of a flight plan of the aircraft (410), a weight of the aircraft, a center of gravity of the aircraft (410), and the part of the aircraft (410) to receive;
wherein the controller unit is configured to calculate one or more required parameter (311) based on at least the information (310) from the aircraft (410);
wherein the controller unit is configured to compare (340) the required parameter (311) against a corresponding limit of the parameter (330);
wherein the required parameter (311) is one or more of a required pressure of the air cushion (121), a required pressure of the lower layer (130), a required acceleration, a required braking, and a required rotation;
wherein the limit parameter (330) includes at least one of a pressure limit of the air cushion (121), a pressure limit of the lower layer (130), an acceleration limit, a braking limit, and a rotation limit;
wherein the controller unit is configured to transfer a data (350) to at least the aircraft (410) when at least one of the required parameter (311) is greater than the corresponding limit parameter (330);
wherein the aircraft is configured to modify (360) the flight plan of the aircraft
(410) based on at least the data (350) transferred to the aircraft (410);
wherein the controller is configured to repeat the steps until the required parameter (311) is less than or equal to the corresponding limit parameter (330);
wherein the controller unit is configured to control (370) at least one of the receiving bed (100) and the drive mechanism (210) when the required parameter (311) is less than or equal to the corresponding limit parameter (330).

2. Receiving station for an aircraft of claim 1;
wherein the data (350) transferred to the aircraft (410) is at least one of a desired approach speed of the aircraft (410) and a desired approach direction of the aircraft (410).

3. Receiving station for an aircraft of claim 1;
wherein the information (320) from the receiving station includes at least one of a location of the receiving station, an available space in the receiving station, and a weather data at the location of the receiving station;
wherein the available space in the receiving station is part of the receiving station, over which the drive mechanism (210) move the receiving bed (100) in at least one of the linear direction (220) and the rotational direction (230);
wherein the weather data at the location of the receiving bed (100) includes at least one of a wind speed and a wind direction.

4. Receiving station for an aircraft of claim 1;
wherein the controller unit is configured to at least one of store an information from the receiving bed (100) and receives the information from the receiving bed (100);
wherein the information from the receiving bed (100) includes at least one of the pressure limit of the air cushion (121), and the pressure limit of the lower layer (130).

5. Receiving station for an aircraft of claim 1;
wherein the controller unit is configured to at least one of store an information from the drive mechanism (210) and receives the information from the drive mechanism (210);
wherein the information from the drive mechanism (210) includes at least one of the acceleration limit, the braking limit, and the rotation limit.

6. Receiving station for an aircraft of claim 1;
wherein the controller unit is configured to calculate at least one of the required pressure of the air cushion (121) and the required pressure of the lower layer (130) based on at least the information from the aircraft (410).

7. Receiving station for an aircraft of claim 1;
wherein the controller unit is configured to calculate at least a position of the receiving bed (100), a path between two positions, and a corresponding time based on at least the information from the aircraft (410) and the information from the receiving station;
wherein the position of the receiving bed (100) includes at least a starting position, a receiving position, and a stopping position;
wherein the position of the receiving bed (100) and the path between two positions of the receiving bed (100) is within the available space in the receiving station;
wherein the receiving position is a position at which the part of the aircraft (410) touches the air cushion (121);
wherein the part of the aircraft (410) continues to be on the air cushion (121) at least between the receiving position and the stopping position;
wherein the controller unit is configured to calculate at least a required acceleration, a required braking, and a required rotation based on at least the position of the receiving bed (100), the corresponding time, and the path between two positions of the receiving bed (100).

8. Receiving station for an aircraft of claim 2;
wherein at least one of the desired approach speed of the aircraft (410) and the desired approach direction of the aircraft (410) is calculated based on at least one of a desired pressure of the air cushion (121), a desired pressure of the lower layer (130), a desired acceleration, a desired braking, and a desired rotation;
wherein the desired pressure of the air cushion (121) is one of the pressure limit of the air cushion (121) when the required pressure of the air cushion (121) is greater than the pressure limit of the air cushion (121) and the required pressure of the air cushion (121) when the required pressure of the air cushion is less than or equal to the pressure limit of the air cushion (121);
wherein the desired pressure of the lower layer (130) is one of the pressure limit of the lower layer (130) when the required pressure of the lower layer (130) is greater than the pressure limit of the lower layer (130) and the required pressure of the lower layer when the required pressure of the lower layer (130) is not greater than the pressure limit of the lower layer (130);
wherein the desired acceleration is one of the acceleration limit of the drive mechanism (210) when the required acceleration is greater than the acceleration limit and the required acceleration of the drive mechanism (210) when the required acceleration is less than or equal to the acceleration limit;
wherein the desired braking is one of the braking limit of the drive mechanism (210) when the required braking is greater than the braking limit and the required braking of the drive mechanism when the required braking is less than or equal to the braking limit;
wherein the desired rotation is one of the rotation limit of the drive mechanism (210) when the required rotation is greater than the rotation limit and the required rotation of the drive mechanism (210) when the required rotation is less than orequal to the rotation limit.

9. Receiving station for an aircraft of claim 1;
wherein the controller unit is configured to control the pressure of the air cushion (121) to be the required pressure of the air cushion (121);
wherein the controller is configured to control the pressure of the lower layer (130) to be the pressure of the required pressure of the lower layer (130);
wherein the controller unit is configured to control the drive unit of the drive mechanism to achieve at least one of the required acceleration and the required braking;
wherein the controller unit is configured to control the direction control unit (212) of the drive mechanism (210) to achieve the required rotation.

10. Receiving station for an aircraft of claim 9;
wherein the controller unit is configured to ensure the receiving bed (100) is at the position of the receiving bed at the corresponding time;
wherein the controller unit is configured to change the position of the receiving bed (100) by changing at least one of the required acceleration, the required braking and the required rotation by a factor to ensure the part of the aircraft (410) touches the air cushion (121) of the receiving bed (100) at the receiving position.

11. Receiving station for an aircraft of claim 10;
wherein the aircraft (410) is configured to reject landing and to go around if the part of the aircraft (410) does not touch the air cushion (121) at the receiving position.

12. Method of receiving an aircraft (410) at a receiving station according to claim 1, wherein the method comprises the steps of;
receiving an information from the aircraft (410), wherein the information from the aircraft (410) includes at least one of a flight plan of the aircraft (410), a weight of the aircraft (410), a center of gravity of the aircraft (410), and a part of the aircraft (410) to receive;
receiving an information from the receiving station, wherein the information from the receiving station includes at least one of a location of the receiving station, an available space in the receiving station, and a weather data at the location of the receiving station;
at least one of store an information from the receiving bed (100) and receiving the information from the receiving bed (100), wherein the information from the receiving bed includes at least one of a pressure limit of an air cushion (121) of an upper layer (120) of the receiving bed (100), and a pressure limit of a lower layer (130) of the receiving bed (100);
at least one of storing an information from a drive mechanism (210) and receiving the information from the drive mechanism (210), wherein the information from the drive mechanism (210) includes at least one of an acceleration limit of the drive mechanism (210), a braking limit of the drive mechanism (210), and a rotation limit of the drive mechanism (210);
calculating at least one of a required pressure of the air cushion (121), a required pressure of the lower layer (130) based on at least the information from the aircraft (410);
calculating at least one of a position of the receiving bed (100), a corresponding time to be in the position of the receiving bed (100), and a path between two positions of the receiving bed (100) based on at least one of the information from the aircraft (410), and the information from the receiving station;
calculating at least one of a required acceleration, a required braking and a required rotation based on the calculated the position of the receiving bed (100), the corresponding time, and the path between two positions of the receiving bed (100);
calculating at least a desired approach speed of the aircraft (410) and a desired approach direction of the aircraft (410) based on at least a limit parameter if at least one of a required parameter is greater than at least one of the limitparameter;
wherein the required parameter is at least one of the required pressure of the air cushion (121), the required pressure of the lower layer (130), the required acceleration, the required braking, and the required rotation;
wherein the limit parameter is at least one of the pressure limit of the air cushion (121), the pressure limit of the lower layer (130), the acceleration limit, the braking limit, and the rotation limit;
modifying the flight plan of the aircraft (410) based on at least one of the desired approach speed of the aircraft (410), and the desired approach direction of the aircraft (410);
ensuring the receiving bed (100) to be at the calculated position of the receiving bed (100) at the corresponding time; and
rejecting landing of the aircraft (410) and go around if the part of the aircraft (410) does not touch the air cushion (121) at the receiving position.

## Patentansprüche

1. Aufnahmestation für ein Flugzeug (410), umfassend:
ein Aufnahmebett (100), wobei das Aufnahmebett mindestens eine Kompressoreinheit (110), eine obere Schicht (120) und eine untere Schicht (130) umfasst;
wobei die obere Schicht (120) mindestens ein Luftkissen (121) enthält;
wobei das Luftkissen (121) der oberen Schicht (120) dazu ausgelegt ist, mindestens einen Teil eines Flugzeugs (410) aufzunehmen;
wobei mindestens eines von dem Luftkissen (121) der oberen Schicht (120) und der unteren Schicht (130) dazu ausgelegt ist, Luft aus der Kompressoreinheit (110) zu empfangen;
wobei die untere Schicht (130) dazu ausgelegt ist, das Aufnahmebett (100) durch Blasen von Luft durch eine Vielzahl von Auslässen (131) schweben zu lassen; und
einen Antriebsmechanismus (210), wobei der Antriebsmechanismus (210) mindestens eines von einer Antriebseinheit (211) und einer Richtungssteuereinheit (212) enthält;
wobei der Antriebsmechanismus (210) dazu ausgelegt ist, das Aufnahmebett (100) in mindestens einer von einer Linearrichtung (220) und einer Drehrichtung (230) zu bewegen;
wobei die Aufnahmestation eine Steuereinheit enthält;
wobei die Steuereinheit dazu ausgelegt ist, mindestens Informationen (310) aus dem empfangenden Flugzeug (410) und Informationen (320) aus der Aufnahmestation zu empfangen;
wobei die aus dem Flugzeug empfangenen Informationen (310) mindestens eines von einem Flugplan des Flugzeugs (410), einem Gewicht des Flugzeugs, einem Schwerpunkt des Flugzeugs (410) und dem aufzunehmenden Teil des Flugzeugs (410) enthalten;
wobei die Steuereinheit dazu ausgelegt ist, einen oder mehrere erforderliche Parameter (311) basierend auf mindestens den Informationen (310) aus dem Flugzeug (410) zu berechnen;
wobei die Steuereinheit dazu ausgelegt ist, den erforderlichen Parameter (311) mit einem entsprechenden Grenzwert des Parameters (330) zu vergleichen (340);
wobei der erforderliche Parameter (311) eines oder mehreres von einem erforderlichen Druck des Luftkissens (121), einem erforderlichen Druck der unteren Schicht (130), einer erforderlichen Beschleunigung, einer erforderlichen Bremsung und einer erforderlichen Drehung ist;
wobei der Grenzwertparameter (330) mindestens eines von einem Druckgrenzwert des Luftkissens (121), einem Druckgrenzwert der unteren Schicht (130), einem Beschleunigungsgrenzwert, einem Bremsgrenzwert und einem Drehgrenzwert enthält;
wobei die Steuereinheit dazu ausgelegt ist, Daten (350) an mindestens das Flugzeug (410) zu übertragen, wenn mindestens einer der erforderlichen Parameter (311) größer als der entsprechende Grenzwertparameter (330) ist;
wobei das Flugzeug dazu ausgelegt ist, den Flugplan des Flugzeugs (410) basierend auf mindestens den an das Flugzeug (410) übertragenen Daten (350) zu ändern (360);
wobei die Steuerung dazu ausgelegt ist, die Schritte zu wiederholen, bis der erforderliche Parameter (311) kleiner oder gleich dem entsprechenden Grenzwertparameter (330) ist;
wobei die Steuereinheit dazu ausgelegt ist, mindestens eines von dem Aufnahmebett (100) und dem Antriebsmechanismus (210) zu steuern (370), wenn der erforderliche Parameter (311) kleiner oder gleich dem entsprechenden Grenzwertparameter (330) ist.

2. Aufnahmestation für ein Flugzeug gemäß Anspruch 1,
wobei die an das Flugzeug (410) übertragenen Daten (350) mindestens eines von einer Sollanfluggeschwindigkeit des Flugzeugs (410) und einer Sollanflugrichtung des Flugzeugs (410) sind.

3. Aufnahmestation für ein Flugzeug gemäß Anspruch 1,
wobei die Informationen (320) aus der Aufnahmestation mindestens eines von einen Ort der Aufnahmestation, einem verfügbaren Platz in der Aufnahmestation und Wetterdaten am Ort der Aufnahmestation enthalten;
wobei der verfügbare Platz in der Aufnahmestation Teil der Aufnahmestation ist, über die der Antriebsmechanismus (210) das Aufnahmebett (100) in mindestens einer von der Linearrichtung (220) und der Drehrichtung (230) bewegt;
wobei die Wetterdaten am Ort des Aufnahmebettes (100) mindestens eines einer Windgeschwindigkeit und einer Windrichtung enthalten.

4. Aufnahmestation für ein Flugzeug gemäß Anspruch 1,
wobei die Steuereinheit dazu ausgelegt ist, mindestens eines von Informationen aus dem Aufnahmebett (100) zu speichern und Informationen aus dem Aufnahmebett (100) zu empfangen;
wobei die Informationen aus dem Aufnahmebett (100) mindestens eines von dem Druckgrenzwert des Luftkissens (121) und dem Druckgrenzwert der unteren Schicht (130) enthalten.

5. Aufnahmestation für ein Flugzeug gemäß Anspruch 1,
wobei die Steuereinheit dazu ausgelegt ist, mindestens eines von Informationen aus dem Antriebsmechanismus (210) zu speichern und Informationen aus dem Antriebsmechanismus (210) zu empfangen;
wobei die Informationen aus dem Antriebsmechanismus (210) mindestens eines des Beschleunigungsgrenzwerts, des Bremsgrenzwerts und des Drehgrenzwerts enthalten.

6. Aufnahmestation für ein Flugzeug gemäß Anspruch 1,
wobei die Steuereinheit dazu ausgelegt ist, mindestens einen des erforderlichen Drucks des Luftkissens (121) und des erforderlichen Drucks der unteren Schicht (130) basierend auf mindestens den Informationen aus dem Flugzeug (410) zu berechnen.

7. Aufnahmestation für ein Flugzeug gemäß Anspruch 1,
wobei die Steuereinheit dazu ausgelegt ist, mindestens eine Position des Aufnahmebettes (100), einen Weg zwischen zwei Positionen und eine entsprechende Zeit basierend auf mindestens den Informationen aus dem Flugzeug (410) und den Informationen aus der Aufnahmestation zu berechnen;
wobei die Position des Aufnahmebettes (100) mindestens eine Ausgangsposition, eine Aufnahmeposition und eine Halteposition beinhaltet;
wobei die Position des Aufnahmebettes (100) und der Weg zwischen zwei Positionen des Aufnahmebettes (100) innerhalb des verfügbaren Platzes in der Aufnahmestation liegt;
wobei die Aufnahmeposition eine Position ist, an der der Teil des Flugzeugs (410) das Luftkissen (121) berührt;
wobei sich der Teil des Flugzeugs (410) weiterhin auf dem Luftkissen (121) mindestens zwischen der Aufnahmeposition und der Halteposition befindet;
wobei die Steuereinheit dazu ausgelegt ist, mindestens eine erforderliche Beschleunigung, eine erforderliche Bremsung und eine erforderliche Drehung basierend auf mindestens der Position des Aufnahmebettes (100), der entsprechenden Zeit und dem Weg zwischen zwei Positionen des Aufnahmebettes (100) zu berechnen.

8. Aufnahmestation für ein Flugzeug gemäß Anspruch 2,
wobei mindestens eines von der Sollanfluggeschwindigkeit des Flugzeugs (410) und der Sollanflugrichtung des Flugzeugs (410) basierend auf mindestens einem von einem Solldruck des Luftkissens (121), einem Solldruck der unteren Schicht (130), einer Sollbeschleunigung, einer Sollbremsung und einer Solldrehung berechnet wird;
wobei der Solldruck des Luftkissens (121) einer des Druckgrenzwertes des Luftkissens (121) ist, wenn der erforderliche Druck des Luftkissens (121) größer als der Druckgrenzwert des Luftkissens (121) ist, und des Solldrucks des Luftkissens (121) ist, wenn der erforderliche Druck des Luftkissens kleiner oder gleich des Druckgrenzwerts des Luftkissens (121) ist;
wobei der Solldruck der unteren Schicht (130) einer des Druckgrenzwertes der unteren Schicht (130) ist, wenn der erforderliche Druck der unteren Schicht (130) größer als der Druckgrenzwert der unteren Schicht (130) ist, und des Solldrucks der unteren Schicht ist, wenn der erforderliche Druck der unteren Schicht (130) nicht größer als der Druckgrenzwert der unteren Schicht (130) ist;
wobei die Sollbeschleunigung einer des Beschleunigungsgrenzwertes des Antriebsmechanismus (210) ist, wenn die erforderliche Beschleunigung größer als der Beschleunigungsgrenzwert ist, und der erforderlichen Beschleunigung des Antriebsmechanismus (210) ist, wenn die erforderliche Beschleunigung kleiner oder gleich dem Beschleunigungsgrenzwert ist;
wobei die Sollbremsung eines des Bremsgrenzwertes des Antriebsmechanismus (210) ist, wenn die erforderliche Bremsung größer als der Bremsgrenzwert ist, und der erforderlichen Bremsung des Antriebsmechanismus ist, wenn die erforderliche Bremsung kleiner oder gleich dem Bremsgrenzwert ist;
wobei die Solldrehung eines des Drehgrenzwertes des Antriebsmechanismus (210) ist, wenn die erforderliche Drehung größer als der Drehgrenzwert ist, und der erforderlichen Drehung des Antriebsmechanismus (210) ist, wenn die erforderliche Drehung kleiner oder gleich dem Drehgrenzwert ist.

9. Aufnahmestation für ein Flugzeug gemäß Anspruch 1,
wobei die Steuereinheit dazu ausgelegt ist, den Druck des Luftkissens (121) zu steuern, sodass er dem erforderlichen Druck des Luftkissens (121) entspricht;
wobei die Steuerung dazu ausgelegt ist, den Druck der unteren Schicht (130) zu steuern, sodass er dem erforderlichen Druck der unteren Schicht (130) entspricht;
wobei die Steuereinheit dazu ausgelegt ist, die Antriebseinheit des Antriebsmechanismus zu steuern, um mindestens eines der erforderlichen Beschleunigung und der erforderliche Bremsung zu erreichen;
wobei die Steuereinheit dazu ausgelegt ist, die Richtungssteuereinheit (212) des Antriebsmechanismus (210) zu steuern, um die erforderliche Drehung zu erreichen.

10. Aufnahmestation für ein Flugzeug gemäß Anspruch 9,
wobei die Steuereinheit dazu ausgelegt ist, sicherzustellen, dass sich das Aufnahmebett (100) zur entsprechenden Zeit an der Position des Aufnahmebettes befindet;
wobei die Steuereinheit dazu ausgelegt ist, die Position des Aufnahmebettes (100) durch Ändern mindestens eines der erforderlichen Beschleunigung, der erforderlichen Bremsung und der erforderlichen Drehung um einen Faktor zu ändern, um sicherzustellen, dass der Teil des Flugzeugs (410) das Luftkissen (121) des Aufnahmebettes (100) an der Aufnahmeposition berührt.

11. Aufnahmestation für ein Flugzeug gemäß Anspruch 10,
wobei das Flugzeug (410) dazu ausgelegt ist, eine Landung abzulehnen und eine Schleife zu fliegen, wenn der Teil des Flugzeugs (410) nicht das Luftkissen (121) an der Aufnahmeposition berührt.

12. Verfahren zum Aufnehmen eines Flugzeugs (410) an einer Aufnahmestation gemäß Anspruch 1, wobei das Verfahren die folgenden Schritte umfasst:
Empfangen von Informationen aus dem Flugzeug (410), wobei die Informationen aus dem Flugzeug (410) mindestens eines von einem Flugplan des Flugzeugs (410), einem Gewicht des Flugzeugs (410), einem Schwerpunkt des Flugzeugs (410) und einem Teil des Flugzeugs (410) zum Aufnehmen enthalten;
Empfangen von Informationen aus der Aufnahmestation, wobei die Informationen aus der Aufnahmestation mindestens eines von einen Ort der Aufnahmestation, einem verfügbaren Platz in der Aufnahmestation und Wetterdaten am Ort der Aufnahmestation enthalten;
mindestens eines von Speichern von Informationen aus dem Aufnahmebett (100) und Empfangen der Informationen aus dem Aufnahmebett (100), wobei die Informationen aus dem Aufnahmebett mindestens eines von einem Druckgrenzwert eines Luftkissens (121) einer oberen Schicht (120) des Aufnahmebettes (100) und einem Druckgrenzwerte einer unteren Schicht (130) des Aufnahmebettes (100) enthalten;
mindestens eines von Speichern von Informationen aus einem Antriebsmechanismus (210) und Empfangen der Informationen aus dem Antriebsmechanismus (210), wobei die Informationen aus dem Antriebsmechanismus (210) mindestens eines von einem Beschleunigungsgrenzwert des Antriebsmechanismus (210), einem Bremsgrenzwert des Antriebsmechanismus (210) und einem Drehgrenzwert des Antriebsmechanismus (210) enthalten;
Berechnen mindestens eines von einem erforderlichen Druck des Luftkissens (121), einem erforderlichen Druck der unteren Schicht (130) basierend auf mindestens den Informationen aus dem Flugzeug (410);
Berechnen mindestens eines von einer Position des Aufnahmebettes (100), einer entsprechenden Zeit, um in der Position des Aufnahmebettes (100) zu sein, und eines Wegs zwischen zwei Positionen des Aufnahmebettes (100) basierend auf mindestens einem der Informationen aus dem Flugzeug (410) und der Informationen aus der Aufnahmestation;
Berechnen mindestens eines von einer erforderlichen Beschleunigung, einer erforderlichen Bremsung und einer erforderlichen Drehung basierend auf der berechneten Position des Aufnahmebettes (100), der entsprechenden Zeit und dem Weg zwischen zwei Positionen des Aufnahmebettes (100);
Berechnung mindestens einer Sollanfluggeschwindigkeit des Flugzeugs (410) und einer Sollanflugrichtung des Flugzeugs (410) basierend auf mindestens einem Grenzwertparameter, wenn mindestens einer eines erforderlichen Parameters größer als mindestens einer der Grenzwertparameter ist;
wobei der erforderliche Parameter mindestens eines von dem erforderlichen Druck des Luftkissens (121), dem erforderlichen Druck der unteren Schicht (130), der erforderlichen Beschleunigung, der erforderlichen Bremsung und der erforderlichen Drehung ist;
wobei der Grenzwertparameter mindestens eines von dem Druckgrenzwert des Luftkissens (121), dem Druckgrenzwert der unteren Schicht (130), dem Beschleunigungsgrenzwert, dem Bremsgrenzwert und dem Drehgrenzwert ist;
Ändern des Flugplans des Flugzeugs (410) basierend auf mindestens einem von der Sollanfluggeschwindigkeit des Flugzeugs (410) und der Sollanflugrichtung des Flugzeugs (410);
Sicherstellen, dass sich das Aufnahmebett (100) zum entsprechenden Zeitpunkt an der berechneten Position des Aufnahmebettes (100) befindet; und
Ablehnen der Landung des Flugzeugs (410) und Fliegen einer Schleife, wenn der Teil des Flugzeugs (410) nicht das Luftkissen (121) an der Aufnahmeposition berührt.

## Revendications

1. Station de réception pour un aéronef (410), comprenant :
un lit de réception (100), dans laquelle le lit de réception comprend au moins une unité à compresseur (110), une couche supérieure (120), et une couche inférieure (130) ;
dans laquelle la couche supérieure (120) inclut au moins un coussin d'air (121) ;
dans laquelle le coussin d'air (121) de la couche supérieure (120) est configuré pour recevoir au moins une partie d'un aéronef (410) ;
dans laquelle au moins un du coussin d'air (121) de la couche supérieure (120) et de la couche inférieure (130) est configuré pour recevoir de l'air à partir de l'unité à compresseur (110) ;
dans laquelle la couche inférieure (130) est configurée pour faire flotter le lit de réception (100) en soufflant de l'air à travers une pluralité de sorties (131) ; et
un mécanisme d'entraînement (210), dans laquelle le mécanisme d'entraînement (210) inclut au moins une d'une unité d'entraînement (211) et d'une unité de commande de direction (212) ;
dans laquelle le mécanisme d'entraînement (210) est configuré pour déplacer le lit de réception (100) dans au moins une d'une direction linéaire (220) et d'une direction rotationnelle (230) ;
dans laquelle la station de réception inclut une unité de commande ;
dans laquelle l'unité de commande est configurée pour recevoir au moins une information (310) à partir de l'aéronef de réception (410) et une information (320) à partir de la station de réception ;
dans laquelle l'information (310) reçue à partir de l'aéronef inclut au moins un d'un plan de vol de l'aéronef (410), d'un poids de l'aéronef, d'un centre de gravité de l'aéronef (410), et la partie de l'aéronef (410) à recevoir ;
dans laquelle l'unité de commande est configurée pour calculer un ou plusieurs paramètres nécessaires (311) sur la base au moins de l'information (310) provenant de l'aéronef (410) ;
dans laquelle l'unité de commande est configurée pour comparer (340) le paramètre nécessaire (311) à une limite correspondante du paramètre (330) ;
dans laquelle le paramètre nécessaire (311) est un ou plusieurs d'une pression nécessaire du coussin d'air (121), d'une pression nécessaire de la couche inférieure (130), d'une accélération nécessaire, d'un freinage nécessaire, et d'une rotation nécessaire ;
dans laquelle le paramètre de limite (330) inclut au moins une d'une limite de pression du coussin d'air (121), d'une limite de pression de la couche inférieure (130), d'une limite d'accélération, d'une limite de freinage, et d'une limite de rotation ;
dans laquelle l'unité de commande est configurée pour transférer une donnée (350) au moins à l'aéronef (410) lorsqu'au moins un des paramètres nécessaires (311) est supérieur au paramètre de limite correspondant (330) ;
dans laquelle l'aéronef est configuré pour modifier (360) le plan de vol de l'aéronef (410) sur la base au moins de la donnée (350) transférée à l'aéronef (410) ;
dans laquelle la commande est configurée pour répéter les étapes jusqu'à ce que le paramètre nécessaire (311) soit inférieur ou égal au paramètre de limite correspondant (330) ;
dans laquelle l'unité de commande est configurée pour commander (370) au moins un du lit de réception (100) et du mécanisme d'entraînement (210) lorsque le paramètre nécessaire (311) est inférieur ou égal au paramètre de limite correspondant (330).

2. Station de réception pour un aéronef selon la revendication 1,
dans laquelle la donnée (350) transférée à l'aéronef (410) est au moins une d'une vitesse d'approche souhaitée de l'aéronef (410) et d'une direction d'approche souhaitée de l'aéronef (410).

3. Station de réception pour un aéronef selon la revendication 1,
dans laquelle l'information (320) provenant de la station de réception inclut au moins un d'un emplacement de la station de réception, d'un espace disponible dans la station de réception, et d'une donnée météorologique à l'emplacement de la station de réception ;
dans laquelle l'espace disponible dans la station de réception fait partie de la station de réception, sur lequel le mécanisme d'entraînement (210) déplace le lit de réception (100) dans au moins une de la direction linéaire (220) et de la direction rotationnelle (230) ;
dans laquelle la donnée météorologique à l'emplacement du lit de réception (100) inclut au moins une d'une vitesse du vent et d'une direction du vent.

4. Station de réception pour un aéronef selon la revendication 1,
dans laquelle l'unité de commande est configurée pour au moins un de stocker une information provenant du lit de réception (100) et de recevoir l'information à partir du lit de réception (100) ;
dans laquelle l'information provenant du lit de réception (100) inclut au moins une de la limite de pression du coussin d'air (121), et de la limite de pression de la couche inférieure (130).

5. Station de réception pour un aéronef selon la revendication 1,
dans laquelle l'unité de commande est configuré pour au moins un de stocker une information provenant du mécanisme d'entraînement (210) et de recevoir l'information à partir du mécanisme d'entraînement (210) ;
dans laquelle l'information provenant du mécanisme d'entraînement (210) inclut au moins une de la limite d'accélération, de la limite de freinage, et de la limite de rotation.

6. Station de réception pour un aéronef selon la revendication 1,
dans laquelle l'unité de commande est configurée pour calculer au moins une de la pression nécessaire du coussin d'air (121) et de la pression nécessaire de la couche inférieure (130) sur la base au moins de l'information provenant de l'aéronef (410).

7. Station de réception pour un aéronef selon la revendication 1,
dans laquelle l'unité de commande est configurée pour calculer au moins une position du lit de réception (100), un chemin entre deux positions, et un temps correspondant sur la base au moins de l'information provenant de l'aéronef (410) et de l'information provenant de la station de réception ;
dans laquelle la position du lit de réception (100) inclut au moins une position de démarrage, une position de réception, et une position d'arrêt ;
dans laquelle la position du lit de réception (100) et le chemin entre deux positions du lit de réception (100) est à l'intérieur de l'espace disponible dans la station de réception ;
dans laquelle la position de réception est une position à laquelle la partie de l'aéronef (410) touche le coussin d'air (121) ;
dans laquelle la partie de l'aéronef (410) continue d'être sur le coussin d'air (121) au moins entre la position de réception et la position d'arrêt ;
dans laquelle l'unité de commande est configurée pour calculer au moins une accélération nécessaire, un freinage nécessaire, et une rotation nécessaire sur la base au moins de la position du lit de réception (100), du temps correspondant, et du chemin entre deux positions du lit de réception (100).

8. Station de réception pour un aéronef selon la revendication 2,
dans laquelle au moins une de la vitesse d'approche souhaitée de l'aéronef (410) et de la direction d'approche souhaitée de l'aéronef (410) est calculée sur la base au moins d'un d'une pression souhaitée du coussin d'air (121), d'une pression souhaitée de la couche inférieure (130), d'une accélération souhaitée, d'un freinage souhaité, et d'une rotation souhaitée ;
dans laquelle la pression souhaitée du coussin d'air (121) est une de la limite de pression du coussin d'air (121) lorsque la pression nécessaire du coussin d'air (121) est supérieure à la limite de pression du coussin d'air (121) et de la pression nécessaire du coussin d'air (121) lorsque la pression nécessaire du coussin d'air est inférieure ou égale à la limite de pression du coussin d'air (121) ;
dans laquelle la pression souhaitée de la couche inférieure (130) est une de la limite de pression de la couche inférieure (130) lorsque la pression nécessaire de la couche inférieure (130) est supérieure à la limite de pression de la couche inférieure (130) et de la pression nécessaire de la couche inférieure lorsque la pression nécessaire de la couche inférieure (130) n'est pas supérieure à la limite de pression de la couche inférieure (130) ;
dans laquelle l'accélération souhaitée est une de la limite d'accélération du mécanisme d'entraînement (210) lorsque l'accélération nécessaire est supérieure à la limite d'accélération et de l'accélération nécessaire du mécanisme d'entraînement (210) lorsque l'accélération nécessaire est inférieure ou égale à la limite d'accélération ;
dans laquelle le freinage souhaité est une de la limite de freinage du mécanisme d'entraînement (210) lorsque le freinage nécessaire est supérieur à la limite de freinage et du freinage nécessaire du mécanisme d'entraînement lorsque le freinage nécessaire est inférieur ou égal à la limite de freinage ;
dans laquelle la rotation souhaitée est une de la limite de rotation du mécanisme d'entraînement (210) lorsque la rotation nécessaire est supérieure à la limite de rotation et de la rotation nécessaire du mécanisme d'entraînement (210) lorsque la rotation nécessaire est inférieure ou égale à la limite de rotation.

9. Station de réception pour un aéronef selon la revendication 1,
dans laquelle l'unité de commande est configurée pour commander la pression du coussin d'air (121) pour être la pression nécessaire du coussin d'air (121) ;
dans laquelle la commande est configurée pour commander la pression de la couche inférieure (130) pour être la pression de la pression nécessaire de la couche inférieure (130) ;
dans laquelle l'unité de commande est configurée pour commander l'unité d'entraînement du mécanisme d'entraînement pour accomplir au moins un de l'accélération nécessaire et du freinage nécessaire ;
dans laquelle l'unité de commande est configurée pour commander l'unité de commande de direction (212) du mécanisme d'entraînement (210) pour accomplir la rotation nécessaire.

10. Station de réception pour un aéronef selon la revendication 9,
dans laquelle l'unité de commande est configurée pour garantir que le lit de réception (100) est à la position du lit de réception au temps correspondant ;
dans laquelle l'unité de commande est configurée pour changer la position du lit de réception (100) en changeant au moins un de l'accélération nécessaire, du freinage nécessaire et de la rotation nécessaire selon un facteur pour garantir que la partie de l'aéronef (410) touche le coussin d'air (121) du lit de réception (100) à la position de réception.

11. Station de réception pour un aéronef selon la revendication 10,
dans laquelle l'aéronef (410) est configuré pour rejeter l'atterrissage et contourner si la partie de l'aéronef (410) ne touche pas le coussin d'air (121) à la position de réception.

12. Procédé de réception d'un aéronef (410) à une station de réception selon la revendication 1, dans lequel le procédé comprend les étapes de :
la réception d'une information à partir de l'aéronef (410), dans lequel l'information provenant de l'aéronef (410) inclut au moins un d'un plan de vol de l'aéronef (410), d'un poids de l'aéronef (410), d'un centre de gravité de l'aéronef (410), et d'une partie de l'aéronef (410) à recevoir ;
la réception d'une information à partir de la station de réception, dans lequel l'information provenant de la station de réception inclut au moins un d'un emplacement de la station de réception, d'un espace disponible dans la station de réception, et d'une donnée météorologique à l'emplacement de la station de réception ;
au moins un du stockage d'une information provenant du lit de réception (100) et de la réception de l'information à partir du lit de réception (100), dans lequel l'information provenant du lit de réception inclut au moins une d'une limite de pression d'un coussin d'air (121) d'une couche supérieure (120) du lit de réception (100), et d'une limite de pression d'une couche inférieure (130) du lit de réception (100) ;
au moins un du stockage d'une information provenant d'un mécanisme d'entraînement (210) et de la réception de l'information à partir du mécanisme d'entraînement (210), dans lequel l'information provenant du mécanisme d'entraînement (210) inclut au moins une d'une limite d'accélération du mécanisme d'entraînement (210), d'une limite de freinage du mécanisme d'entraînement (210), et d'une limite de rotation du mécanisme d'entraînement (210) ;
le calcul d'au moins une d'une pression nécessaire du coussin d'air (121), d'une pression nécessaire de la couche inférieure (130) sur la base au moins de l'information provenant de l'aéronef (410) ;
le calcul d'au moins une d'une position du lit de réception (100), d'un temps correspondant pour être dans la position du lit de réception (100), et d'un chemin entre deux positions du lit de réception (100) sur la base au moins d'une de l'information provenant de l'aéronef (410), et de l'information provenant de la station de réception ;
le calcul d'au moins un d'une accélération nécessaire, d'un freinage nécessaire et d'une rotation nécessaire sur la base de la position calculée du lit de réception (100), du temps correspondant, et du chemin entre deux positions du lit de réception (100) ;
le calcul d'au moins une vitesse d'approche souhaitée de l'aéronef (410) et une direction d'approche souhaitée de l'aéronef (410) sur la base au moins d'un paramètre de limite si au moins un d'un paramètre nécessaire est supérieur à au moins un des paramètres de limite ;
dans lequel le paramètre nécessaire est au moins un de la pression nécessaire du coussin d'air (121), de la pression nécessaire de la couche inférieure (130), de l'accélération nécessaire, du freinage nécessaire, et de la rotation nécessaire ;
dans lequel le paramètre de limite est au moins une de la limite de pression du coussin d'air (121), de la limite de pression de la couche inférieure (130), de la limite d'accélération, de la limite de freinage, et de la limite de rotation ;
la modification du plan de vol de l'aéronef (410) sur la base au moins d'une de la vitesse d'approche souhaitée de l'aéronef (410), et de la direction d'approche souhaitée de l'aéronef (410) ;
la garantie que le lit de réception (100) soit à la position calculée du lit de réception (100) au temps correspondant ; et
le rejet de l'atterrissage de l'aéronef (410) et le contournement si la partie de l'aéronef (410) ne touche pas le coussin d'air (121) à la position de réception.
